# EUROPÄISCHE PATENTSCHRIFT

(11) **EP 1 218 651 B1**
(45) Veröffentlichungstag und Bekanntmachung des Hinweises auf die Patenterteilung: **11.12.2002**
(21) Anmeldenummer: 00993874.7
(22) Anmeldetag: 12.12.2000
(51) Int. Cl.: F16H 25/24, F16H 25/22

(54) **VORRICHTUNG ZUR UMWANDLUNG EINER DREH- IN EINE AXIALBEWEGUNG**
DEVICE FOR CONVERTING ROTATIONAL MOVEMENT INTO AXIAL MOVEMENT
DISPOSITIF POUR TRANSFORMER UN MOUVEMENT ROTATIF EN UN MOUVEMENT AXIAL

(30) Priorität: 06.05.2000 DE 10022115
(43) Veröffentlichungstag der Anmeldung: 03.07.2002
(73) Patentinhaber: Wittenstein AG, 97999 Igersheim (DE)
(72) Erfinder: BUTSCH, Michael, 88718 Daisendorf (DE); HENLE, Jörg, 97990 Weikersheim (DE)
(74) Vertreter: Patentanwalts-Partnerschaft, Rotermund + Pfusch + Bernhard
(86) Internationale Anmeldenummer: DE0004423
(87) Internationale Veröffentlichungsnummer: WO01086171

(56) Entgegenhaltungen:
- DE-A- 19 600 238
- DE-A- 19 625 761
- DE-A- 19 736 734
- DE-U- 8 702 656
- GB-A- 2 091 375

## Beschreibung

Die Erfindung betrifft eine Vorrichtung zur Umwandlung einer Dreh- in eine Axialbewegung nach dem Oberbegriff des Patentanspruchs 1.

Eine solche Vorrichtung ist aus EP 0 870 129 B1 bekannt.

Die Erfindung beschäftigt sich mit dem Problem, eine einfachere und funktionell bessere Lagerung des die Axialkräfte der Planetenrollen aufnehmenden Lagerkörpers zu schaffen.

Die Erfindung löst dieses Problem durch eine gattungsgemäße Vorrichtung mit den kennzeichnenden Merkmalen des Patentanspruchs 1.

Eine zweckmäßige Ausgestaltung ist Gegenstand des Anspruchs 2.

Eine Ausführung nach Anspruch 3 weist den Vorteil auf, daß die Antriebseinrichtung platzsparend in Axialrichtung entweder in einem Winkel oder parallel zur Drehachse des Schubkörpers beziehungsweise des Planetenrollen-Trägers angeordnet werden kann.

Vorteilhafte erfindungsgemäße Spezialeinrichtungen zeigt der Anspruch 4 auf. Als Antriebseinheit kann hier ein kurzbauender Motor oder Getriebemotor verwendet werden. Bei den Riemenscheiben handelt es sich insbesondere um solche, die bei sogenannten CVT-Getrieben (continuously variable transmission) in der Form zweier Riemenscheibenpaare mit Riemen oder Kette zur stufenlosen Übersetzungsänderung verwendet werden. Dabei muß das eine Riemenscheibenpaar zur Veränderung der Übersetzung und das andere zur Erzielung der Vorspannung des Zugmittels axial eingestellt werden. Ein Nachteil der hierfür bisher eingesetzten hydraulischen Systeme ist ein schlechter Wirkungsgrad, der durch die erfindungsgemäße Vorrichtung deutlich verbessert wird.

Bei den axial zu verstellenden Bremsbelägen handelt es sich um Bremsbeläge an Scheiben- und Trommelbremsen mit jeweils bekanntem Aufbau. Die Anstellung der Bremsbeläge kann mit der erfindungsgemäß elektromechanisch arbeitenden Vorrichtung regelungstechnisch günstiger vorgenommen werden als bei hierfür eingesetzten hydraulisch arbeitenden Systemen. Dies gilt insbesondere bei sogenannten brake-by-wire-Systemen, die keine mechanische Verbindung zu einem von dem Fahrer zu bedienenden Betätigungsmittel benötigen.

Eine weitere Anwendung ist die Betätigung von Kupplungselementen z.B. an Lamellenkupplungen, wobei eine rückwärts selbsthemmende Ausführung energetisch besonders vorteilhaft ist.

Die Erfindung beruht auf dem allgemeinen Gedanken, den Lagerkörper in Lagern zu lagern, die sich an feststehenden Bereichen der bei der erfindungsgemäßen Vorrichtung eingesetzten Antriebseinrichtung abzustützen.

Ein Ausführungsbeispiel der Erfindung ist in der Zeichnung dargestellt.

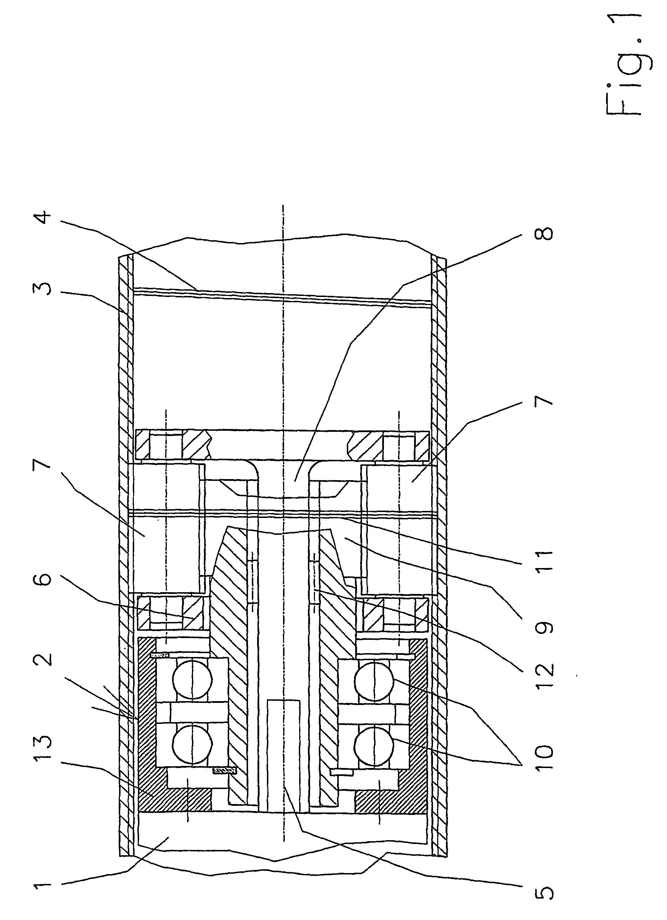

In dieser zeigt die einzige
Fig. 1 eine Vorrichtung zur Umwandlung einer Dreh- in eine Axialbewegung zum einen Teil in einer Ansicht und zum anderen Teil in einem Längsschnitt.

Die nachfolgend als Linearaktuator bezeichnete Vorrichtung zur Umwandlung einer Dreh- in eine Axialbewegung besitzt zwei gegeneinander längsverschiebbare Teile, nämlich eine Antriebseinrichtung 1 mit einem zylindrischen Führungsbereich 2 sowie einen rohrförmig ausgebildeten Schubkörper 3, der auf dem Führungsbereich 2 der Antriebseinrichtung 1 gleitfähig gelagert ist.

Die Antriebseinrichtung 1 kann auch entsprechend dem Anspruch 3 achsversetzt gegenüber der Antriebswelle 5 angeordnet sein. Hierbei kann die Kraftübertragung über einen Zahnrad- oder Riementrieb erfolgen. Bei einer achsgleichen Anordnung von Antriebseinrichtung 1 und Antriebswelle 5 kann die Antriebseinrichtung innerhalb oder auch außerhalb des Verschiebeweges des Schubkörpers 3 vorgesehen sein.

Auf seiner zylindrischen Innenfläche ist der Schubkörper 3 mit einer Gewinderille 4 versehen.

Aus der Antriebseinrichtung 1 treibt eine Antriebswelle 5 einen Träger 6 an, in dem Planetenrollen 7 drehbar gelagert sind. Die Planetenrollen 7 sind mit umlaufenden Rillen oder Gewinderillen versehen, die in die Gewinderille 4 des Schubkörpers 3 eingreifen. Dadurch erfolgt bei einem angetriebenen Träger 6 eine Relativverschiebung zwischen der Antriebseinrichtung 1 und dem Schubkörper 3.

Die Verbindung des Trägers 6 mit der Antriebswelle 5 erfolgt über einen Schaft 8, der jeweils fest mit der Antriebswelle 5 und dem Träger 6 verbunden ist. Der Schaft 8 kann auch einstückig mit dem Träger 6 ausgebildet sein.

Zur Abstützung der in den Planetenrollen 7 im Betrieb des Linearaktuators auftretenden Axialkräfte dient ein Lagerkörper 9. Dieser Lagerkörper 9 ist als eine Hohlwelle ausgebildet, die über Wälzlager 10 axial fixiert, drehbar an einem fest mit dem Gehäuse der Antriebseinrichtung 1 befestigten Ring 13 gelagert ist. In demjenigen Bereich, in dem dieser Lagerkörper 9 radial innerhalb der Planetenrollen 7 liegt, besitzt er in die Rillen der Planetenrollen 7 eingreifende Lagerrillen 11. Der Schaft 8, über den der Träger 6 mit der Antriebswelle 5 verbunden ist, durchgreift den Lagerkörper 9.

Zwischen dem Lagerkörper 9 und dem Schaft 8 ist eine Lagerung über Wälzlager 12 vorgesehen.

## Patentansprüche

1. Vorrichtung zur Umwandlung einer Dreh- in eine Axialbewegung mit von einer Antriebseinrichtung (1) ausgehenden Antriebswelle (5) angetriebenen, umfangsmäßig auf gleichem Abstand gehaltenen Planetenrollen (7) und einem durch die Planetenrollen (7) axial verschiebbaren Schubkörper (3), bei der
- die Planetenrollen (7) in einem um seine Achse angetriebenen Träger (6) umfangsmäßig fixiert, drehbar gelagert und mit Umfangsrillen oder Gewinderillen versehen sind,
- der Träger (6) drehmomentfest mit der in seiner Achse rotierenden Antriebswelle (5) verbunden ist,
- die Planetenrollen (7) über ihre Umfangsrillen oder Gewinderillen in mindestens eine gewindeartige Rille des längs der Achse des Trägers (6) verschiebbaren Schubkörpers (3) eingreifen,
- der Träger (6) die Planetenrollen (7) antreibt,
- der Schubkörper (3) als ein die Planetenrollen (7) umfassender Hohlkörper ausgebildet ist,
- im Zentrum des Trägers (6) konzentrisch innerhalb der Planetenrollen (7) ein um dessen Achse gegenüber der Antriebswelle (5) unabhängig drehbarer, mit einem Bereich umlaufender Lagerrillen (11) oder Gewinderillen ausgestatteter Lagerkörper (9) vorgesehen ist, dessen Lagerrillen (11) oder Gewinderillen in zugeordnete Umfangsrillen oder Gewinderillen der Planetenrollen (7) eingreifen,
**gekennzeichnet durch die Merkmale**
- der Lagerkörper (9) ist rohrförmig ausgebildet und an einem Ende axial fixiert, und relativ zu der Antriebseinrichtung (1) drehbar gelagert,
- für die drehmomentfeste Verbindung des Trägers (6) mit der Antriebswelle (5) ist ein Bereich des Trägers (6), der als mit diesem Träger (6) fest verbundener Schaft (8) ausgebildet sein kann, frei drehbar **durch** das Zentrum des Lagerkörpers (9) hindurchgeführt.

2. Vorrichtung nach Anspruch 1,
**dadurch gekennzeichnet,**
**dass** der Lagerkörper (9) und der diesen durchgreifende Bereich des Trägers (6) gegeneinander wälzgelagert sind.

3. Vorrichtung nach Anspruch 1, oder 2,
**dadurch gekennzeichnet,**
**daß** die Antriebseinrichtung (1) und die Antriebswelle (5) gegeneinander versetzte Drehachsen aufweisen und dieser Versatz über Kraftübertragungsmittel realisiert wird.

4. Vorrichtung nach einem der vorhergehenden Ansprüche zur axialen Verstellung einer Riemenscheibe oder eines Bremsbelages sowie zur Betätigung von Kupplungselementen in insbesondere Kraftfahrzeugen.

## Claims

1. A device for converting a rotational movement into an axial movement, having a planetary roller (7) driven by a drive shaft (5) coming out of a drive mechanism (1) and held at a uniform distance on the circumference, and having a thrust body (3) that is axially displaceable by the planetary rollers (7), whereby
- the planetary rollers (7) are secured at the periphery in a support (6) which is driven about it axis, they are rotationally mounted and provided with peripheral grooves or threaded grooves,
- the support (6) is connected in a fixed-torque manner to the drive shaft (5) which rotates about its axis,
- the planetary rollers (7) engage in at least one thread-like groove on the thrust body (3) which is displaceable along the axis of the support (6) by way of their peripheral grooves or threaded grooves,
- the support (6) drives the planetary rollers (7),
- the thrust body (3) is designed as a hollow body which encloses the planetary rollers (7),
- at the center of the support (6) concentrically inside the planetary rollers (7), a bearing body (9) is provided; it can rotate independently of the drive shaft (5) about its axis, having an area of peripheral bearing grooves (11) or threaded grooves, said bearing grooves (11) or threaded grooves engaging in respective peripheral grooves or threaded grooves on the planetary rollers (7),
**characterized by** the features
- the bearing body (9) is designed to be tubular and is rotatably mounted and is axially secured at one end relative to the drive mechanism (1),
- for a torque-fixed connection of the support (6) to the drive shaft (5), an area of the support (6) which may be designed as a shaft (8) fixedly connected to this support (6), passes through the center of the bearing body (9) in a freely rotatable manner.

2. The device according to Claim 1,
**characterized in that**
the bearing body (9) and the area of the support (6) which passes through the bearing body are roller bearing mounted opposite one another.

3. The device according to Claim 1 or 2,
**characterized in that**
the drive mechanism (1) and the drive shaft (5) have mutually offset axes of rotation, this offset being implemented through force transmission means.

4. The device according to one of the preceding claims for adjusting a belt pulley or a brake lining and for actuation of clutch elements in motor vehicles in particular.

## Revendications

1. Dispositif de conversion d'un mouvement rotatif en un mouvement axial comportant des rouleaux planétaires (7) maintenus périphériquement à égale distance, entraînés par un arbre d'entraînement (5) partant d'un dispositif d'entraînement (1) et un corps coulissant (3) capable de translation axiale par l'intermédiaire des rouleaux planétaires, dans lequel
- les rouleaux planétaires (7) sont fixés périphériquement autour d'un support (6) entraîné autour de son axe, supportés en rotation et pourvus de rainures circulaires ou de rainures hélicoïdales,
- le support (6) est relié fixe en rotation avec l'arbre d'entraînement (5) tournant dans son axe,
- le support (6) entraîne les rouleaux planétaires (7),
- le corps coulissant (3) est conformé en un corps creux entourant les rouleaux planétaires (7),
- un corps de palier (9) est prévu au centre du support (6) de manière concentrique à l'intérieur des rouleaux planétaires (7) capable, autour de son axe, de rotation indépendante par rapport à l'arbre d'entraînement (5), pourvu d'une zone de rainures de paliers (11) circulaires ou de rainures hélicoïdales, dont les rainures de paliers (11) ou rainures hélicoïdales viennent en prise dans des rainures circulaires ou rainures hélicoïdales des rouleaux planétaires (7),
**caractérisé en ce que**
- le corps de palier (9) est conformé en tube et est fixé à une extrémité axiale et est supporté capable de rotation par rapport au dispositif d'entraînement (1),
- pour la liaison fixe en rotation du support (6) avec l'arbre d'entraînement (5), une zone du support (6), qui peut être configurée en tige (8) reliée de manière fixe avec ce support (6), traverse libre en rotation

2. Dispositif selon la revendication 1, **caractérisé en ce que** le corps de palier (9) et la zone du support traversant celui-ci, sont supportés l'un par rapport à l'autre par des paliers à rouleaux.

3. Dispositif selon la revendication 1 ou 2, **caractérisé en ce que** le dispositif d'entraînement (1) et l'arbre d'entraînement (5) présentent des axes décalés l'un par rapport à l'autre et ce décalage est réalisé par l'intermédiaire de moyens de transmission de forces.

4. Dispositif selon l'une des revendications précédentes, pour le déplacement axial d'une poulie à courroie ou d'une garniture de frein, ainsi que pour l'actionnement d'éléments de couplage en particulier dans des véhicules à moteur.
